# EUROPEAN PATENT APPLICATION

(11) **EP 1 600 765 A1**
(43) Date of publication of application: **30.11.2005**
(21) Application number: 05253175.3
(22) Date of filing: 24.05.2005
(51) Int. Cl.: G01N 27/02, G01N 17/04

(54) **Probes for electrochemical impedance spectroscopy**

(30) Priority: 25.05.2004 US 853039
(71) Applicant: UNITED TECHNOLOGIES CORPORATION, Hartford, CT 06101 (US)
(72) Inventor: Schlichting, Kevin Walter, Storrs, CT 06268 (US)
(74) Representative: Leckey, David Herbert

(57) **Abstract**

Probes (77) for assessing a coating (55) on a substrate (50) via electrochemical impedance spectroscopy are described herein. Embodiments of theses probes comprise an electrolyte reservoir (90) capable of containing a liquid electrolyte (91) therein; a counter electrode (95) disposed so as to be capable of being operatively coupled to the liquid electrolyte; at least one sealing device (94) capable of retaining the liquid electrolyte (91) within the electrolyte reservoir (90); and a delivery device (93) operatively coupled to the electrolyte reservoir (90), the delivery device being capable of delivering a predetermined amount of the liquid electrolyte onto the coating (55) on the substrate (50) to operatively couple the coating (55) to the counter electrode (95). These probes may also comprise a reference electrode (92). These small, handheld probes can be used to assess thermal barrier coatings on gas turbine engine components in production, repair and maintenance environments so that the remaining lifetime of the components can be easily and non-destructively determined.

## Description

### FIELD OF THE INVENTION

The present invention relates generally to non-destructive inspection techniques for evaluating coatings on a substrate. More specifically, the present invention relates to utilizing electrochemical impedance spectroscopy to assess thermally grown oxides on gas turbine engine components, and probes for use therewith.

### BACKGROUND OF THE INVENTION

Gas turbine engines have long been used to convert chemical potential energy, in the form of fuel, to thermal energy, and then to mechanical energy for use in propelling aircraft, generating electric power, pumping fluids, etc. The efficiency of gas turbine engines increases with increasing operating temperatures. Therefore, there is a large incentive to raise the combustion and exhaust temperatures of such engines. However, the metallic materials that are used in the hot-section components of such engines operate at temperatures very near the upper limits of their thermal stability. In fact, in the hottest section of modem gas turbine engines, metallic materials are utilized in hot gas paths at temperatures above their melting points. These metallic materials survive such temperatures only because they are cooled in some way, and/or because they comprise thermal barrier coatings (TBCs) thereon that lower the thermal conductivity of the component, thereby allowing the components to be operated at higher temperatures.

Typical thermal barrier coatings on gas turbine engine components (i.e., turbine blades, turbine vanes, seals, combustor panels, etc.) generally comprise a metallic bondcoat and a ceramic topcoat. The metallic bondcoat may comprise a MCrAlY alloy, where M is Ni, Co, or NiCo, which is applied directly overlying the metallic substrate in any suitable manner. The thermally insulating ceramic topcoat may comprise yttria stabilized zirconia, which is applied overlying the metallic bondcoat layer in any suitable manner. While this topcoat layer is being deposited, a thermally grown oxide (TGO) layer, such as alumina, forms on the metallic bondcoat layer, between the metallic bondcoat and the ceramic topcoat. As time at temperature and number of cycles increases, this TGO layer grows in thickness, and eventually reaches a critical value, followed by failure of the coating. Failure of the coating exposes the underlying alloy material of the gas turbine engine component to extreme temperatures, which accelerates the oxidation and/or corrosion of the alloy material, leading to the component's failure. Since this TGO layer is such an important factor in controlling the degradation of TBCs, determining the degree of degradation of TBCs is essential for predicting the remaining lifetime and failure of TBCs on gas turbine engine components. Additionally, defects may be created while the components are being coated. Therefore, it would be beneficial to have a quick and easy way to non-destructively assess coating quality in the production line, or in a repair or maintenance environment.

There are currently a variety of non-destructive methods that can be utilized to measure or evaluate the thickness and quality of a TGO layer on a component. Such methods generally measure or estimate a coating thickness by determining the change in some physical characteristic that does not require destruction of the coating or coated component. Non-destructive methods include methods such as: eddy current methods, laser fluorescence, photoluminescence, smart coatings, acoustic waveguide sensing, and magnetic methods, among others. Eddy current methods utilize a drive coil to induce eddy currents within the coated component being tested, so that secondary magnetic fields resulting from the induced eddy currents can then be detected by a sensing coil. Laser fluorescence involves shining an argon laser beam on a ceramic topcoat layer and passing it therethrough to reach the TGO, which then fluoresces, emitting fluorescent light out through the topcoat and to a detector. Photoluminescence involves doping a coating with a photoluminescent material, directing an exciting radiation at the coating, and detecting variations in the intensity of a characteristic monolithic phase peak in the emission spectrum of the photoluminescent material. Smart coatings are coatings that are doped with chemical taggants that can indicate the degree of wear and damage of a coated component during operation, or that can be detected in downstream exhaust gases as the coating deteriorates. Acoustic waveguide sensing involves detecting the variations in the magnitude and velocity of the acoustic waves that pass through a coating as it deteriorates. Magnetic methods involve utilizing nonlinear harmonics techniques to determine the degradation of a coating.

It has recently been discovered that electrochemical impedance spectroscopy (EIS) can be utilized as a non-destructive inspection technique to measure or estimate the thickness of a TGO layer on a gas turbine engine component, thereby allowing the quality of the TBC to be assessed. Since yttria stabilized zirconia is an ionic conductor, and TGO is typically an insulator, EIS can be used to measure impedance spectra of TBCs on gas turbine engine components, and compositional or microstructural changes in the TGO can be determined therefrom. Commonly-owned U. S. Application Serial No. 10/417,032 (Published United States Patent Application 2004/0207413) discloses the specifics of how EIS can be utilized in such a manner, and the application is hereby incorporated in full by reference.

Existing EIS probes are not ideal for assessing TBCs on gas turbine engine components. Many existing EIS probes are designed for laboratory use, and as such, they are large and do not easily lend themselves to a production, repair or maintenance environment. Additionally, existing EIS probes generally require the part being measured to be fixtured, and existing probes cannot make measurements on complex surfaces. As many existing EIS probes are either grossly inadequate for our purposes, or comprise expensive laboratory equipment that cannot be easily and portably used in a production, repair or maintenance environment, it would be desirable to have new EIS probes that allow the thickness, quality, structural integrity, degree of degradation, and/or remaining lifetime of TBCs to be assessed, and/or that allow the presence of mixed oxides in the TGO layer to be determined. Ideally, these probes would allow quick and easy non-destructive assessments of coatings on gas engine turbine components to be made so that poor quality TBCs can be repaired or replaced before damage to the underlying component occurs.

### SUMMARY OF THE INVENTION

Accordingly, the above-identified shortcomings of existing EIS probes are overcome by embodiments of the present invention, which relates to novel EIS probe designs that can be used to assess the thickness, quality, structural integrity, degree of degradation, and/or remaining lifetime of a thermal barrier coating system, and/or that allow the presence of mixed oxides in a thermally grown oxide layer to be determined. The probes of this invention are much smaller than existing EIS probes and they allow measurements to be made on complex surfaces in a production, repair and/or maintenance environment. These probes make it quick and easy to perform non-destructive quality control checks on coated components so that poor quality TBCs can be identified and repaired or replaced before damage to the underlying component occurs. These probes can be used to assess coatings on gas turbine engine components.

Embodiments of this invention comprise electrode probes for assessing a coating on a substrate. These probes comprise: an electrolyte reservoir capable of containing a liquid electrolyte therein; a counter electrode disposed so as to be capable of being operatively coupled to the liquid electrolyte; at least one sealing device capable of retaining the liquid electrolyte within the electrolyte reservoir; and a delivery device operatively coupled to the electrolyte reservoir, the delivery device being capable of delivering a predetermined amount of the liquid electrolyte onto the coating on the substrate to operatively couple the coating to the counter electrode.

The counter electrode may comprise the electrolyte reservoir itself, or it may comprise an electrode disposed within the electrolyte reservoir. The counter electrode may comprise any suitable metallic material, such as for example, the same metallic material as the substrate, a metallic material that is more noble than the metallic material of the substrate, and/or a metallic material that is more active than the metallic material of the substrate.

Embodiments of these probes may also comprise a reference electrode disposed within the electrolyte reservoir in operative contact with the liquid electrolyte. The reference electrode may comprise any suitable electrode, such as for example, a saturated calomel electrode or an Ag/AgCl electrode. These probes may also comprise a holding plate or other suitable device for holding the reference electrode and the counter electrode in position within the electrolyte reservoir.

The sealing devices in these probes may comprise any suitable sealing mechanism for retaining the liquid electrolyte within the electrolyte reservoir, such as for example, o-rings.

The delivery device may comprise any suitable delivery device capable of delivering a predetermined amount of liquid electrolyte onto the coating when a predetermined event occurs, while ensuring substantially all the rest of the electrolyte remains within the electrolyte reservoir. Some suitable non-limiting delivery devices comprise check valves, porous membranes, and porous ceramic junctions. In embodiments, the predetermined event comprises pressing the delivery device against the coating to allow a small amount of liquid electrolyte to flow out of the electrolyte reservoir and onto the coating. When the liquid electrolyte is operatively coupled to the coating on the substrate, fluid communication between the liquid electrolyte and the coating exists, providing an electrical path from the coating through the liquid electrolyte to the counter electrode, thereby completing an electrical circuit between the counter electrode and a working electrode that is operatively coupled to an uncoated portion of the substrate.

The electrolyte may comprise any suitable electrolyte, such as for example, sodium chloride (NaCl), potassium chloride (KCl), sodium sulfate (NaSO₄), and/or potassium hydroxide (KOH). These probes may also comprise an electrical lead for operatively coupling the electrode probe to an electrochemical impedance spectroscopy device.

The coating on the substrate may comprise a thermal barrier coating system on a gas turbine engine component, such as for example, a turbine vane, a turbine blade, a combustor panel, a blade outer air seal, a turbine exhaust case, an augmentor liner, and any other gas turbine engine component that may have TBCs thereon. These pen-like, handheld probes may be utilized to obtain an estimate of remaining lifetime of the thermal barrier coating system on the gas turbine engine component in a production environment, a repair environment, and/or a maintenance environment.

Embodiments of this invention comprise systems for assessing a coating on a substrate. These systems comprise: a working electrode capable of being operatively coupled to an uncoated portion of the substrate; an electrode probe capable of being operatively coupled to the coating on the substrate; and an electrochemical impedance device, wherein the electrode probe is electrically connected to the electrochemical impedance device via a first electrical lead, and the working electrode is electrically connected to the electrochemical impedance device via a second electrical lead. The working electrode may comprise the uncoated portion of the substrate itself.

Embodiments of this invention also comprise handheld systems for non-destructively assessing a coating on a gas turbine engine component. These handheld systems comprise: a working electrode capable of operatively coupling an uncoated portion of the gas turbine engine component to the handheld system; a probe capable of operatively coupling the coating on the gas turbine engine component to the handheld system; and an electrochemical impedance device operatively coupled to the working electrode and the probe, wherein the probe comprises: a sealed electrolyte reservoir that contains a liquid electrolyte therein; a counter electrode capable of operatively coupling the coating on the gas turbine engine component to the liquid electrolyte; and a delivery device operatively coupled to the sealed electrolyte reservoir and capable of delivering a predetermined amount of the liquid electrolyte onto the coating on the gas turbine engine component to operatively couple the coating to the counter electrode. The working electrode may comprise the uncoated portion of the gas turbine engine component itself.

Further features, aspects and advantages of the present invention will be readily apparent to those skilled in the art during the course of the following description, wherein references are made to the accompanying figures which illustrate some preferred forms of the present invention, and wherein like characters of reference designate like parts throughout the drawings.

### DESCRIPTION OF THE DRAWINGS

The systems and methods of the present invention are described herein below with reference to various figures, in which:
Figure 1 is a graph showing an exemplary impedance spectra, comprising a plot of impedance versus frequency, and a plot of phase angle versus frequency, as utilized in embodiments of this invention;
Figure 2 is a sectional view of an exemplary thermal barrier coating system on a gas turbine engine component, as evaluated by embodiments of this invention;
Figure 3 is a schematic diagram showing an exemplary electrochemical impedance system, as utilized in embodiments of this invention;
Figure 4 is a schematic diagram showing the circuit equivalent model of the thermal barrier coating system shown in Figures 2 and 3;
Figure 5 is a schematic diagram showing a two electrode probe system for use with an electrochemical impedance system, as utilized in embodiments of this invention;
Figure 6 is a schematic diagram showing a two electrode probe system for use with an electrochemical impedance system, as utilized in other embodiments of this invention;
Figure 7 is a schematic diagram showing a three electrode probe system for use with an electrochemical impedance system, as utilized in other embodiments of this invention; and
Figure 8 is a schematic diagram showing a three electrode probe system for use with an electrochemical impedance system, as utilized in yet other embodiments of this invention.

### DETAILED DESCRIPTION OF THE INVENTION

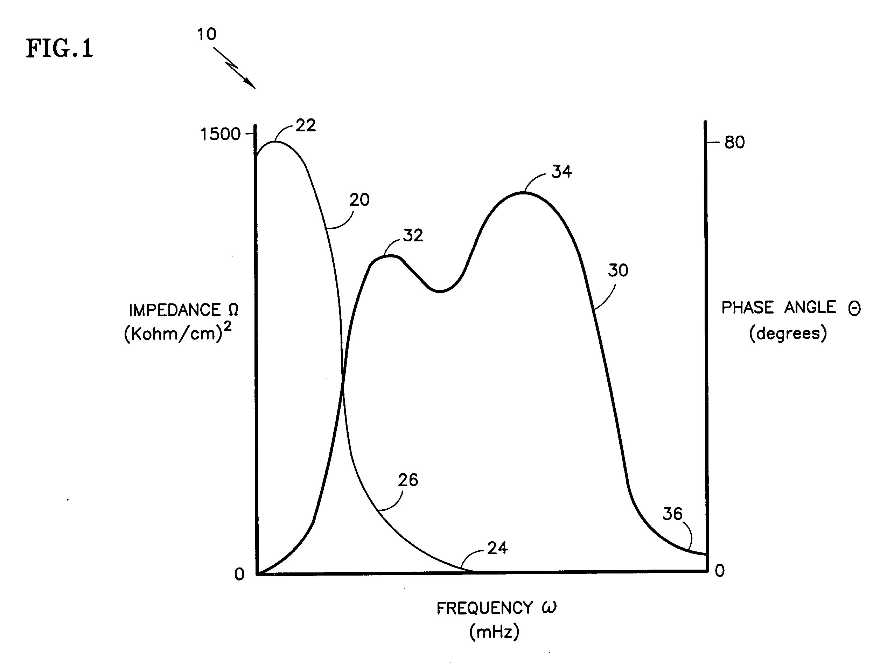

For the purposes of promoting an understanding of the invention, reference will now be made to some preferred embodiments of this invention as illustrated in FIGURES 1-8 and specific language used to describe the same. The terminology used herein is for the purpose of description, not limitation. Specific structural and functional details disclosed herein are not to be interpreted as limiting, but merely as a basis for the claims as a representative basis for teaching one skilled in the art to variously employ the present invention. Any modifications or variations in the depicted structures and methods, and such further applications of the principles of the invention as illustrated herein, as would normally occur to one skilled in the art, are considered to be within the scope of this invention.

This invention relates to probes that can be used with electrochemical impedance spectroscopy to assess thermally grown oxides on gas turbine engine components. These probes may be used to quickly, easily and non-destructively assess the quality of thermal barrier coatings (TBCs) on such components so that poor quality TBCs can be identified and repaired or replaced before damage to the underlying component occurs. These probes may be easily utilized in production, repair and maintenance environments.

As previously noted, electrochemical impedance spectroscopy (EIS), also known as AC impedance, can be utilized as a non-destructive inspection technique to assess the thickness, quality, structural integrity, degree of degradation, and/or remaining lifetime, etc. of a TBC system on gas turbine engine components, and/or to determine the presence of mixed oxides in a TGO layer. EIS is advantageous as compared to other techniques because EIS allows very small amplitude signals to be used, which have little or no effect on the properties being measured. For example, in order to obtain impedance measurements, in embodiments of this invention, a voltage of about 5-50 mV may be applied to a coated component over a range of frequencies of about 0.001-1,000,000 Hz. The electrical impedance of the coated component can then be measured as a function of the frequency of the imposed AC current. This measurement provides parameters such as: the absolute impedance, the real part of the impedance, the imaginary part of the impedance, and the phase angle. A plot of these parameters as a function of frequency and against each other provides an impedance spectra 10 for the coated component. Figure 1 shows an exemplary impedance spectra 10 as utilized in embodiments of this invention, which comprises a plot 20 of impedance Ω (in Kohm/cm²) versus frequency ω (in mHz), and a plot 30 of phase angle θ (in degrees) versus frequency ω. An assessment of the quality of the coating can be determined from this impedance spectra 10, and the remaining lifetime of the coating can also be estimated therefrom. This in turn allows poor quality TBC coatings to be repaired or replaced before damage to the underlying component occurs.

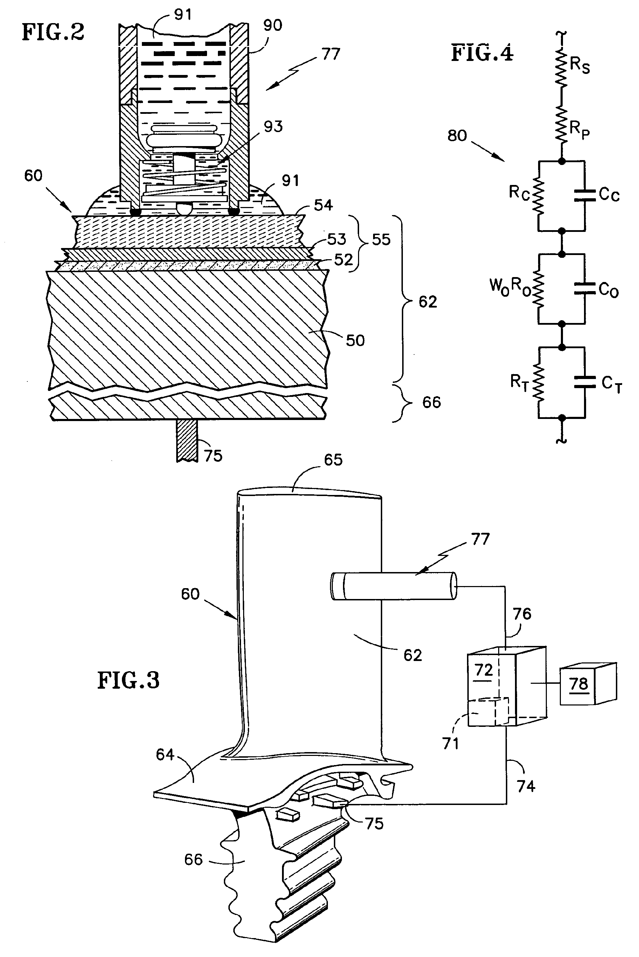

As shown in Figure 2, typical TBC systems 55 for gas turbine engine components comprise a metallic bondcoat layer 52 overlying a metallic substrate 50, a thermally insulating ceramic topcoat layer 54 overlying the metallic bondcoat layer 52, and an *in situ* formed TGO layer 53 disposed between the metallic bondcoat layer 52 and the ceramic topcoat layer 54. The metallic substrate 50 may comprise a nickel-based superalloy comprising, in weight percent, about 1-25% cobalt, about 1-25% chromium, about 0-8% aluminum, about 0-10% molybdenum, about 0-15% tungsten, about 0-12% tantalum, about 0-5% titanium, about 0-7% rhenium, about 0-6% ruthenium, about 0-4% niobium, about 0-0.2% carbon, about 0-0.15% boron, about 0-0.05% yttrium, about 0-1.6% hafnium, with the balance being nickel and incidental impurities. The metallic bondcoat 52 may comprise a MCrAlY alloy, where M is Ni, Co, or NiCo, which is applied directly overlying the metallic substrate 50 via electron beam physical vapor deposition (EB-PVD) or any other suitable method. The thermally insulating ceramic topcoat 54 may comprise yttria stabilized zirconia, which is applied overlying the metallic bondcoat layer 52 in any suitable manner.

While this topcoat layer 54 is being deposited, a thermally grown oxide (TGO) layer 53, such as alumina, forms on the metallic bondcoat layer 52, between the metallic bondcoat 52 and the ceramic topcoat 54. As time at temperature and number of cycles increases, this TGO layer 53 grows in thickness, eventually reaching a critical value, followed by failure of the coating. Defects may also be formed in these TBC systems during production. Such defects, whether formed during production or during use, can ultimately lead to failure of the underlying component, which can be very costly, cumbersome and time consuming to remedy. Ideally, it would be desirable to be able to estimate the remaining lifetime of a TBC system, so that poor quality TBCs can be repaired or replaced before damage to the underlying component occurs. The probes of this invention allow the remaining lifetime of TBC systems to be estimated, thereby allowing component failures to be prevented. These probes allow quick and easy non-destructive quality control checks to be made either during production of the coated component, or whenever direct physical contact between the probe and a coated component is possible. For example, a coated gas turbine engine component may not be accessible while on an airplane wing, but the component of interest may become accessible without having to remove and completely disassemble the engine.

The probes of this invention may be utilized with any suitable EIS system to evaluate the coating quality on any coated gas turbine engine component. An exemplary, non-limiting gas turbine engine component, a blade 60, is shown in Figure 3, having a coated airfoil portion 62 extending outwardly from a platform 64 towards the blade tip 65, and an uncoated blade root portion 66 extending inwardly from the platform 64. The coated airfoil portion 62 of blade 60 comprises a thermal barrier coating system 55 thereon. The exemplary EIS system shown here comprises an impedance analyzer 72 operatively coupled to the coated component 60 via a pair of electrical leads 74, 76. Each electrical lead has two ends. One end of each electrical lead 74, 76 is operatively coupled to the impedance analyzer 72, while the other end of each lead 74, 76 is operatively coupled to an electrode 75, 77 respectively. In embodiments, electrical lead 74 is operatively coupled directly to an uncoated portion of the part (i.e., uncoated blade root portion 66 of blade 60), thereby making the uncoated portion of the part the working electrode 75. Electrical lead 76 is operatively coupled to a wetting electrode 77, which contacts a coated portion of the part (i.e., coated airfoil portion 62 of blade 60). The wetting electrode 77 comprises a counter electrode 95, and may also comprise a reference electrode 92. When a continuous electrical path exists between the two electrodes 75, 77, a voltage source 71 may be used to drive a reaction between the counter electrode 95 and the working electrode 75, and impedance parameters may be measured by the impedance analyzer 72. In embodiments, this voltage source 71 may be part of the impedance analyzer 72. The impedance analyzer 72 may be operatively coupled to a computer 78, which can display the measured impedance parameters and/or perform analysis thereon to determine quantitative and/or qualitative properties of the coating based on the measured parameters.

Various theoretical, empirical or hybrid models may be utilized to determine coating properties such as layer thickness, the presence, size and quantity of imperfections (i.e., voids within or between layers of the coating that indicate separation of the layers or delamination thereof), the degree of degradation of the coating, the estimated remaining lifetime of the coating, etc.

Figure 4 shows a basic electric circuit model 80 of the TBC system on the gas turbine engine blade 60 shown in Figures 2 and 3. From one end of the circuit to the other, the electrolyte solution resistance Rs is shown in series with the resistance of the electrode R_{P}. This, in turn, is in series with the parallel combination of the topcoat capacitance C_{C} and the topcoat resistance R_{C}. This, in turn is in series with the parallel combination of the TGO capacitance C_{O} and the TGO resistance R_{O} multiplied by a Warburg coefficient W_{O}. This, in turn, is in series with the parallel combination of the interface capacitance C_{T} and the interface resistance R_{T} of the interface between the TGO and the bondcoat.

Referring again to Figure 1, an exemplary impedance spectra 10 comprising a plot 20 of impedance Ω (in Kohm/cm²) versus frequency ω, and a plot 30 of phase angle θ versus frequency ω, is shown. The location of the impedance peak 22 is indicative of the resistance R_{T} of the interface between the TGO and the bondcoat, the location of the impedance tail 24 is indicative of the resistance Rp of the electrode, and the location of the impedance transition 26 is indicative of the topcoat resistance R_{C} and the TGO resistance Ro. The location of the low frequency phase angle peak 32 is indicative of the TGO capacitance C_{O}, the location of the high frequency phase angle peak 34 is indicative of the topcoat capacitance Cc, and the location of the phase angle tail 36 is indicative of the interface capacitance C_{T} of the interface between the TGO and the bondcoat. From this impedance spectra 10, the estimated remaining lifetime of the TBC can be determined, allowing poor quality TBCs to be repaired or replaced before damage to the underlying component occurs.

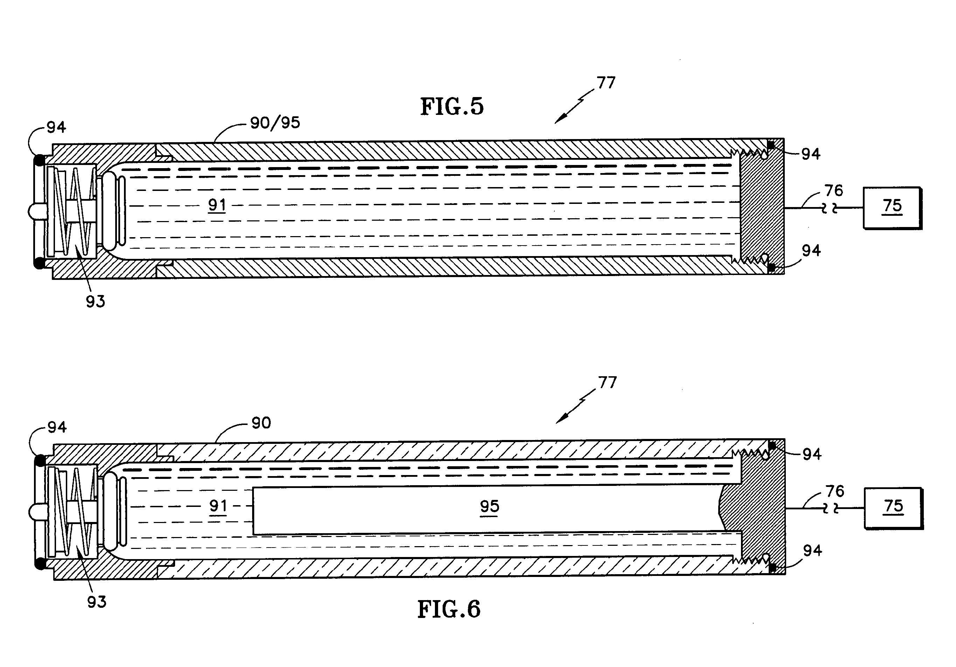

Referring now to Figure 5, one exemplary electrode 77 for use with an electrochemical impedance system is shown. This particular embodiment of the electrode 77 is a wetting electrode probe system comprising two electrodes: a working electrode 75 and a counter electrode 95. This probe 77 comprises a hollow tubular vessel 90 filled with an electrolyte 91. In this embodiment, the hollow tubular vessel 90 is made of metal so that the hollow tubular vessel 90 itself acts as the counter electrode 95. This hollow tubular vessel 90 is preferably made of the same metal material as the base metal alloy of the part (i.e., turbine engine blade 60) being measured so as to limit polarization effects in the circuit. A check valve 93 is present at one end of the probe 77 to keep the electrolyte 91 from escaping therefrom, except when desired. Additionally, o-ring seals 94 or other suitable sealing devices are disposed at each end of the hollow tubular vessel 90 to keep the electrolyte 91 contained therein. When using this probe 77, the counter electrode 95 i s utilized to complete the circuit with the working electrode 75, and the reaction between the counter electrode 95 and the working electrode 75 is driven by a voltage source 71 attached thereto.

Referring now to Figure 6, another exemplary electrode 77 for use with an electrochemical impedance system is shown. This particular embodiment of the electrode 77 is also a wetting electrode probe system comprising two electrodes: a working electrode 75 and a counter electrode 95. In this embodiment, the hollow tubular vessel 90 is not acting as the counter electrode 95, and therefore, this hollow tubular vessel 90 may be made of any suitable material, such as for example, Plexiglas®, which allows the level of electrolyte 91 remaining within the hollow tubular vessel 90 to be readily assessed. In this embodiment, the counter electrode 95 is disposed within the hollow tubular vessel 90, in operative contact with the electrolyte 91. This counter electrode 95 preferably comprises the same metal material as the base metal alloy of the part (i.e., turbine engine blade 60) being measured so as to limit polarization effects in the circuit. As in the previous embodiment, this embodiment also comprises a check valve 93 and o-ring seals 94 or other suitable sealing devices. When using this probe 77, the counter electrode 95 is utilized to complete the circuit with the working electrode 75, and the reaction between the counter electrode 95 and the working electrode 75 is driven by a voltage source 71 attached thereto.

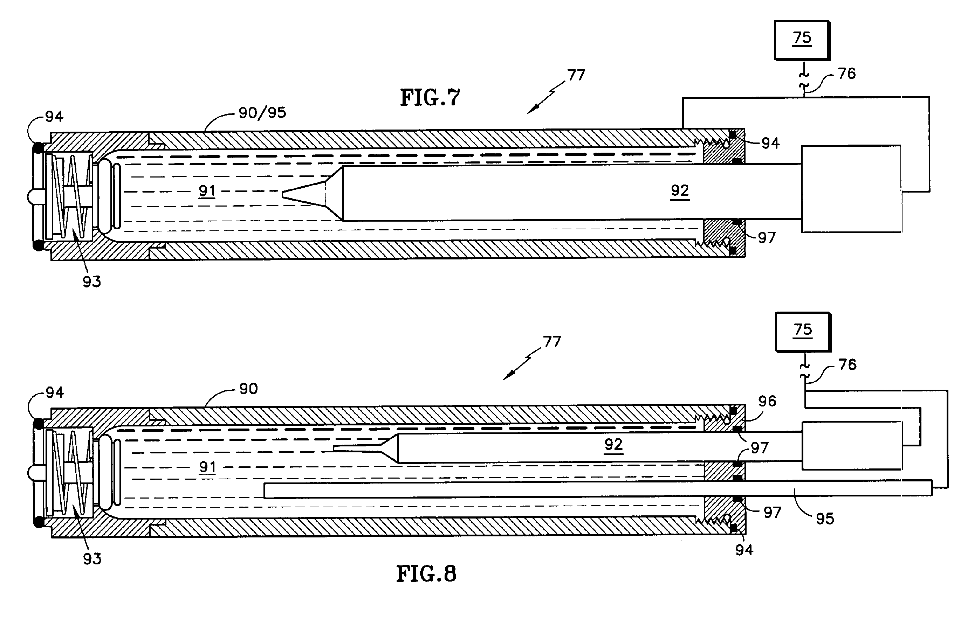

Referring now to Figure 7, another exemplary electrode 77 for use with an electrochemical impedance system is shown. This particular embodiment of the electrode 77 is a wetting electrode probe system comprising three electrodes: a working electrode 75, a counter electrode 95, and a reference electrode 92. As in the previous embodiment, this hollow tubular vessel 90 is made of metal so that the hollow tubular vessel 90 itself acts as the counter electrode 95. This hollow tubular vessel 90 may be made of any suitable metal material, such as for example, a metal material that is more noble or more active than the base metal alloy of the part (i.e., turbine engine blade 60) being measured. This probe 77 also comprises a reference electrode 92 disposed within the hollow tubular vessel 90 and in operative contact with the electrolyte 91. This reference electrode 92 may comprise any suitable electrode, such as for example, a saturated calomel electrode (i.e., Hg/Hg₂Cl₂) or an Ag/AgCl electrode. As in the previous embodiment, this probe 77 also comprises a check valve 93 and o-ring seals 94 or other suitable sealing devices. When using this probe 77, the counter electrode 95 is utilized to control the potential and complete the circuit with the working electrode 75, the reaction between the counter electrode 95 and the working electrode 75 is driven by a voltage source 71 attached thereto, and the reference electrode 92 is utilized to measure the cell potential.

Referring now to Figure 8, another exemplary electrode 77 for use with an electrochemical impedance system is shown. This particular embodiment of the electrode 77 is also a wetting electrode probe system comprising three electrodes: a working electrode 75, a counter electrode 95, and a reference electrode 92. This probe 77 comprises both a counter electrode 95 and a reference electrode 92 within the hollow tubular vessel 90 and in operative contact with the electrolyte 91. In this embodiment, the hollow tubular vessel 90 is not acting as the counter electrode 95, and therefore, this hollow tubular vessel 90 may be made of any suitable material, such as for example, Plexiglas®, which allows the level of electrolyte 91 remaining within the hollow tubular vessel 90 to be readily assessed. As in the previous embodiment, this reference electrode 92 may comprise any suitable electrode, such as for example, a saturated calomel electrode (i.e., Hg/Hg₂Cl₂), or an Ag/AgCl electrode. This counter electrode 95 may comprise any suitable metal material, such as for example, platinum or another metal or alloy that is more noble or more active than the base metal alloy of the part (i.e., turbine engine blade 60) being measured. As in the previous embodiment, this embodiment also comprises a check valve 93 and o-ring seals 94 or other suitable sealing devices. One end of this probe 77 also comprises a holding plate 96 to hold the reference electrode 92 and the counter electrode 95 in position. O-rings or other suitable sealing devices 97 may be used in conjunction with the holding plate 96 to keep the electrolyte 91 contained within the hollow tubular vessel 90. When using this probe 77, the counter electrode 95 is utilized to control the potential and complete the circuit with the working electrode 75, the reaction between the counter electrode 95 and the working electrode 75 is driven by a voltage source 71 attached thereto, and the reference electrode 92 is utilized to measure the cell potential.

As previously discussed, the working electrode 75 generally comprises the uncoated portion of the part itself (i.e., the base alloy of the uncoated blade root portion 66 of the blade 60). The check valve 93 of probe 77 may be positioned on ceramic topcoat layer 54 of the coated portion 62 of the component 60, as shown in Figure 2, and when the probe 77 is depressed thereon, the check valve 93 may open and allow a small amount of electrolyte 91 to flow out therefrom, establishing fluid communication between the coated component 62 and the electrolyte 91 contained within the interior of the probe 77. When both electrodes 75, 77 are in position, a continuous electrical path is established from the uncoated portion 66 of the component 60 to the impedance analyzer 72 via the working electrode 75 and electrical lead 74, from the impedance analyzer 72 to the wetting electrode 77 via electrical lead 76, through the electrolyte 91, and to the thermal barrier coating system 55 on the component 60. Once a continuous electrical path exists between the two electrodes 75, 77, impedance parameters or other desirable parameters may then be obtained by the impedance analyzer 72 or other suitable measuring device.

This invention may comprise any suitable electrolyte 91 that does not attack, destroy or otherwise react with the coating on the coated component being measured, such as for example, a dilute acid, a mixture of acids, or a salt solution having sufficient ionic conductivity to allow the EIS measurements to be obtained. Some suitable, non-limiting electrolytes may comprise one or more of the following materials: sodium chloride (NaCl), potassium chloride (KCl), sodium sulfate (NaSO₄), and/or potassium hydroxide (KOH).

The amount of electrolyte 91 needed varies depending upon the size of the hollow tubular vessel 90. However, there should be at least enough electrolyte in the hollow tubular vessel 90 to sufficiently cover the electrodes therein 92, 95 when the probe 77 is in use at a variety of angles. Once the hollow tubular vessel 90 is filled with enough electrolyte 91 to ensure the electrodes disposed therein 92, 95 are in contact with the electrolyte 91, the probe 77 can then be operatively connected to commercially available EIS equipment 72 via one or more electrical leads 74, 76. The EIS equipment 72 may comprises any suitable devices, which in embodiments may comprise a frequency response analyzer and a data acquisition system. This EIS equipment may be portable so that assessments of coating quality can be made quickly and easily in a variety of environments. For example, this invention may allow quick and easy non-destructive quality control checks to be made either during production of the coated component, or whenever direct physical contact between a probe and a coated component is possible, such as in a repair or maintenance environment.

As described above, this invention provides probes that are specifically designed to be utilized with EIS systems to assess the quality of TBC systems on gas turbine engine components such as turbine vanes, turbine blades, combustor panels, blade outer air seals, turbine exhaust cases, augmentor liners, and any other gas turbine engine components that may have TBCs thereon. Advantageously, these probes are easy to use, and allow quality checks to be made in production, repair and maintenance environments. Therefore, poor quality TBCs can be identified and repaired or replaced before damage to the underlying component occurs. Many other embodiments and advantages will be apparent to those skilled in the relevant art.

Various embodiments of this invention have been described in fulfillment of the various needs that the invention meets. It should be recognized that these embodiments are merely illustrative of the principles of various embodiments of the present invention. Numerous modifications and adaptations thereof will be apparent to those skilled in the art without departing from the spirit and scope of the present invention. Thus, it is intended that the present invention cover all suitable modifications and variations as come within the scope of the appended claims and their equivalents.

## Claims

1. An electrode probe for assessing a coating (55) on a substrate (50), the electrode probe comprising:
an electrolyte reservoir (90) capable of containing a liquid electrolyte (91) therein;
a counter electrode (95) disposed so as to be capable of being operatively coupled to the liquid electrolyte;
at least one sealing device (94) capable of retaining the liquid electrolyte within the electrolyte reservoir, and
a delivery device (93) operatively coupled to the electrolyte reservoir, the delivery device being capable of delivering a predetermined amount of the liquid electrolyte onto the coating on the substrate to operatively couple the coating to the counter electrode.

2. The electrode probe of claim 1, wherein the counter electrode (95) comprises at least one of: (a) the electrolyte reservoir (90) itself, and (b) an electrode (95) disposed within the electrolyte reservoir.

3. The electrode probe of claim 1 or 2, wherein the counter electrode (95) comprises a predetermined metallic material.

4. The electrode probe of claim 3, wherein the predetermined metallic material comprises at least one of: a metallic material that is the same metallic material the substrate comprises, a metallic material that is more noble than the metallic material the substrate comprises, and a metallic material that is more active than the metallic material the substrate comprises.

5. The electrode probe of any preceding claim, further comprising a reference electrode (92) disposed within the electrolyte reservoir (90), the reference electrode capable of being operatively coupled to the liquid electrolyte.

6. The electrode probe of claim 5, wherein the counter electrode comprises an electrode (95) disposed within the electrolyte reservoir (90) and the electrode probe further comprises a holding plate (96) for holding the reference electrode (92) and the counter electrode (95) in position within the electrolyte reservoir.

7. The electrode probe of claim 5 or 6, wherein the reference electrode (92) comprises at least one of: a saturated calomel electrode and an Ag/AgCl electrode.

8. The electrode probe of any preceding claim, further comprising an electrical lead (76) for operatively coupling the electrode probe to an electrochemical impedance spectroscopy device (72).

9. The electrode probe of any preceding claim, wherein the at least one sealing device comprises a first o-ring (94) at a proximate end of the electrolyte reservoir and a second o-ring (94) at a distal end of the electrolyte reservoir for retaining the liquid electrolyte within the electrolyte reservoir.

10. The electrode probe of any preceding claim, wherein the delivery device (93) comprises at least one of: a check valve, a porous membrane, and a porous ceramic junction.

11. The electrode probe of any preceding claim, wherein the delivery device (93) delivers the predetermined amount of the liquid electrolyte (91) onto the coating (55), preferably when a predetermined event occurs, while ensuring substantially all the rest of the electrolyte remains within the electrolyte reservoir (90).

12. The electrode probe of claim 11, wherein the predetermined event comprises pressing the delivery device (93) against the coating (55) to allow the predetermined amount of the liquid electrolyte (91) to flow out of the electrolyte reservoir and onto the coating.

13. The electrode probe of any preceding claim, wherein when the liquid electrolyte (91) is operatively coupled to the coating (55) on the substrate (50), fluid communication between the liquid electrolyte and the coating exists, providing an electrical path from the coating through the liquid electrolyte to the counter electrode (95), thereby completing an electrical circuit between the counter electrode and a working electrode (75) that is operatively coupled to an uncoated portion of the substrate.

14. The electrode probe of any preceding claim, wherein the electrolyte (91) comprises at least one of: sodium chloride (NaCl), potassium chloride (KCl), sodium sulfate (NaSO₄), and potassium hydroxide (KOH).

15. The electrode probe of any preceding claim, wherein the coating (55) on the substrate (50) comprises a thermal barrier coating system on a gas turbine engine component.

16. The electrode probe of claim 15, wherein the electrode probe is capable of being utilized to obtain an estimate of remaining lifetime of the thermal barrier coating system on the gas turbine engine component.

17. The electrode probe of any preceding claim, wherein the electrode probe comprises a pen-like probe that is capable of being handheld.

18. The electrode probe of any preceding claim, wherein the electrode probe is capable of being utilized to assess the coating in at least one of: a production environment, a repair environment, and a maintenance environment.

19. A system for assessing a coating (55) on a substrate (50), the system comprising:
a working electrode (75) capable of being operatively coupled to an uncoated portion of the substrate (50);
an electrode probe (77) capable of being operatively coupled to the coating (55) on the substrate; and
an electrochemical impedance device (72),
wherein the electrode probe is electrically connected to the electrochemical impedance device via a first electrical connection (76), and the working electrode (75) is electrically connected to the electrochemical impedance device via a second electrical connection (74).

20. The system of claim 19, wherein the working electrode (75) comprises the uncoated portion of the substrate (50) itself.

21. The system of claim 19, wherein the electrode probe comprises a probe as claimed in any of claims 1 to 18.

22. A system for non-destructively assessing a coating (55) on a gas turbine engine component (50), the system comprising:
a working electrode (75) capable of operatively coupling an uncoated portion of the gas turbine engine component to the system;
a handheld probe (77) capable of operatively coupling the coating on the gas turbine engine component to the system; and
an electrochemical impedance device (72) operatively coupled to the working electrode (75) and the probe (77),
wherein the probe comprises:
a sealed electrolyte reservoir (90) that contains a liquid electrolyte (91) therein;
a counter electrode (95) capable of operatively coupling the coating (55) on the gas turbine engine component (50) to the liquid electrolyte; and
a delivery device (93) operatively coupled to the sealed electrolyte reservoir and capable of delivering a predetermined amount of the liquid electrolyte (91) onto the coating on the gas turbine engine component to operatively couple the coating to the counter electrode (95).

23. The system of claim 22, wherein the working electrode (75) comprises the uncoated portion of the gas turbine engine component itself.

24. The system of claim 22 or 23, wherein the probe (77) further comprises a reference electrode (92) operatively coupled to the liquid electrolyte (91).
